# EUROPEAN PATENT APPLICATION

(11) **EP 4 079 156 A1**
(43) Date of publication of application: **26.10.2022**
(21) Application number: 21181085.8
(22) Date of filing: 23.06.2021
(51) Int. Cl.: A01N 25/04, A01N 49/00, A01N 65/12, A01N 65/22, A01N 65/28, A01N 65/44, A01N 53/00, A01P 7/00, A01P 17/00

(54) **INSECT CONTROL COMPOSITION**

(30) Priority: 20.04.2021 IN 202141018243
(71) Applicant: Reckitt & Colman (Overseas) Hygiene Home Limited, Slough, Berkshire SL1 3UH (GB)
(72) Inventor: DAS, Avijit, 122001 Haryana (IN); MAKKAPATI, Anil Kumar, 122001 Haryana (IN); MUKHOPADHYAY, Kunal, 122001 Haryana (IN); PANHALKAR, Vartul, 122001 Haryana (IN); SHANMUGAM PERUMAL, Shanthakumar, 122001 Haryana (IN); SINGH, Ramneek, 122001 Haryana (IN); VERMA, Adeeti, 122001 Haryana (IN)
(74) Representative: Paredes Rojas, José Francisco

(57) **Abstract**

The present invention relates to an insect control composition comprising geraniol, at least one active selected from the group consisting of pyrethrum, p-Menthane-3,8-diol, peppermint oil, thymol, eucalyptus oil, citronella oil, basil oil, citral, lemongrass oil, and combinations thereof, and a solvent; wherein the weight ratio between the geraniol to the at least one active is between 0.25:1 and 50:1. The invention further relates to an insect control product comprising said insect control composition and an emanation device. The invention also relates to a use of said insect control composition or said insect control product to kill, knockdown and/or repel insects.

## Description

The present invention relates to an insect control composition, to an insect control product comprising said composition and to a use of the insect control composition or the insect control product to kill, knockdown and/or repel insects.

### Background

Insects carry surprisingly large amounts of bacteria. For example, a single fly can contaminate feed or food with enough bacteria to cause illness. Moist, warm, decaying material protected from sunlight is favoured for fly eggs to hatch and in only 8 short hours for fly larvae or maggots to grow. Flies are transmitters of disease primarily because they feed on human and animal wates. The dangerous bacteria present in these wastes stick to the mouth, footpads and hairs of flies and may then be deposited on food. Fly faeces, which contain disease-bearing organisms, can also contaminate human food. And since flies have no teeth and must take their nourishment in liquid form, they spit on solid food and let it dissolve before consuming. Fly spittle, or vomitus, is swarming with bacteria and contaminates feed and areas where feed is stored.

Mosquitoes, for instance, are the primary carrier for parasites that cause malaria and viruses that cause dengue fever, Chikungunya, Zika and yellow fever. Several approaches have been developed for managing mosquito populations and mitigating the threat to health posed by mosquitoes. The most common approach is to use a chemical insecticide to kill mosquito larvae or pupae or to repel or kill adult mosquitoes. For example, WO 2006/111750 describes an aerosol insecticide, in which one or more synthetic pyrethroids are used as active ingredients. However, if used unwisely or at very high concentrations, chemical insecticides can be toxic to humans and other non-target organisms. Moreover, the widespread global use of chemical insecticides has resulted in mosquitoes developing resistance to many chemical insecticides.

Natural products, such as essential oils, pyrethrum and p-Methane-3,8-diol, have gained significant interest as potential vector control agents in view of their high target specificity and low toxicity towards humans and other non-target organisms. They are also friendlier to the environment than chemical insecticides and do not tend to accumulate along food chains.

Several essential oils have been investigated as potential insecticides. In one study, thyme oil, catnip oil, amyris oil, eucalyptus oil and cinnamon oil were tested against mosquito larvae and as repellents against adult mosquitoes (see Zhu et al., Journal of the American Mosquito Control Association, 2006, 22(3): 515-5220). In another study, the larvicidal and repellent potential of *Mentha piperita* essential oil was investigated (see Kumar et al., Asian Pacific Journal of Tropical biomedicine, 2011, 1(2): 85-88).

Pyrethrum extract is obtained from pyrethrum flowers (*Chrysanthemum cinerariaefolium*). This extract contains pyrethrins or "natural pyrethrins", which are effective pesticides of natural origin.

Besides the efficacy challenges encountered by the person skilled in the art when formulating insect control compositions comprising only natural ingredients, it is also desirable to have a continuously or semi-continuously release of the composition. One way of releasing the active ingredients in an insect control composition continuously or semi-continuously during a certain period of time, is by providing an insecticide composition in a container attached to an emanation device, as described in patent application WO 2013/144596 A1. This emanation device can be, for example, an electric heating device, such as a liquid vaporizer (LV) or a liquid electrical device (LED). However, the insect control composition must have the right balance of ingredients to provide an acceptable repellence of insects without impairing the operation of the emanation device.

Therefore, there is a need of an insect control composition that can be used with an emanation device and that targets, in particular, flying insects. The composition should have a low degree of toxicity to humans and to domestic animals to meet the regulatory requirements of various countries where they are intended to be used. The composition should comprise only natural active ingredients.

It is an object of the present invention to provide a composition comprising natural active ingredients and an insect control product that repel insects, in particular, flying insects.

### Summary of the invention

In a first aspect, the present invention relates to an insect control composition comprising:
- geraniol;
- at least one active selected from the group consisting of pyrethrum, p-Menthane-3,8-diol, peppermint oil, thymol, eucalyptus oil, citronella oil, basil oil, citral, lemongrass oil, and combinations thereof; and
- a solvent;
wherein the weight ratio between the geraniol to the at least one active is between 0.25:1 and 50:1.

In one embodiment, the ratio between the geraniol to the at least one active is between 0.5:1 and 40:1, preferably between 0.75:1 and 30:1, more preferably between 0.75:1 and 20:1, even more preferably between 0.75:1 and 15:1.

In another embodiment, the solvent comprises at least one aliphatic or aromatic hydrocarbon solvent selected from the group consisting of hydrocarbon solvents having a flash point of at least 50°C, preferably having a flash point of at least 60°C, more preferably having a flash point between 60°C and 150°C, even more preferably having a flash point between 60°C and 140°C, and/or having a boiling point of at least 150°C, preferably having a boiling point or at least 190°C, more preferably having a boiling point between 190°C and 500°C, even more preferably having a boiling point between 190°C and 400°C.

In an embodiment, the insect control composition comprises at least 0.01 wt.% of geraniol, based on the total weight of the composition, preferably between 0.01 wt.% and 50 wt.%, more preferably between 0.5 wt.% and 25 wt.%, even more preferably between 1 wt.% and 10 wt.%, most preferably between 2 wt.% and 8 wt.%.

In another embodiment, the insect control composition comprises at least 0.005 wt.% of pyrethrum, based on the total weight of the composition, preferably between 0.025 wt.% and 7.5 wt.%, more preferably between 0.05 wt.% and 5 wt.%, even more preferably between 0.1 wt.% and 2.5 wt.%, most preferably between 0.25 wt.% and 1.5 wt.%.

In another embodiment, the insect control composition comprises at least 0.01 wt.% of the at least one active selected from the group consisting of peppermint oil, thymol, eucalyptus oil, citronella oil, basil oil, citral, lemon grass oil, and combinations thereof, based on the total weight of the composition, preferably between 0.05 wt.% and 40 wt.%, more preferably between 0.1 wt.% and 20 wt.%, even more preferably between 0.5 wt.% and 15 wt.%, most preferably between 1 wt.% and 10 wt.%.

In a preferred embodiment, the at least one active is selected from the group consisting of p-Menthane-3,8-diol, eucalyptus oil, citronella oil, basil oil, and combinations thereof.

In one embodiment, the insect control composition comprises at least 80 wt.% of the solvent, based on the total weight of the composition, preferably at least 85 wt.%, more preferably between 85 wt.% and 95 wt.%.

In a preferred embodiment, the composition is an insect repellent composition or an insecticide composition.

In a second aspect, the invention relates to an insect control product comprising the insect control composition according to the first aspect of the invention and an emanation device wherein said emanation device is selected from the group comprising an electric heating device, a piezo electric diffuser and an ambient emanation device, preferably wherein the emanation device is an electric heating device.

In an embodiment, the insect control product is an insect repellent product or an insecticide product.

In a third aspect, the invention relates to a use of the composition according to the first aspect of the invention or the insect control product according to the second aspect of the invention to kill, knockdown and/or repel insects.

In an embodiment, said insects are flying insects.

In a further aspect, the invention relates to a method of killing, know-down and/or repelling insects in an area of interest comprising the steps of:
a. applying the composition according to the first aspect of the invention to an emanation device selected from the group consisting of electric heating device, a piezo electric diffuser and an ambient emanation device to produce an insect control product according to the second aspect of the invention, or providing the insect control product according to the second aspect of the invention,
b. providing an emanation rate of the insect control product during the operation ranging between 0.02 to 0.5 g/h, preferably between 0.02 to 0.4 g/h, more preferably between 0.02 to 0.3 g/h, and
c. reducing the insect population in said area of interest by at least 10%, 20%, 30%, 40%, 50% as compared to the same period of employing the method when such composition is not used.

### Definitions

The following definitions are used in the present application.

"Insect control product", as used in the present application means: a product comprising a composition, which is used as a means for directly or indirectly controlling, destroying, attracting or repelling insects.

"Bio-efficacy", as used in the present application means: efficacy of an insect control composition or an insect control product to repel, knockdown and/or or kill a determined type of insects.

"Landing and probing experiments", as used in the present application means: experiments performed in a 20m³ chamber. For flying insects, e.g. five-days old, overnight-starved, free flying, lab bred female *Culex quinquefasciatus* mosquitoes or *Aedes aegypti* mosquitoes, 50 free flying insects are released inside the test and control chamber. Subsequently, a trained experimenter enters the test and control chamber for pre-assessment of mosquito readiness by exposing his/her lower limbs for at least 15 minutes. A vaporiser with the composition/formulation to be tested is preheated outside the chamber. After preheating, the vaporiser is allowed to work continuously inside the test chamber, and the windows and the vent of the chamber are closed for a determined amount of time. After this time has passed, the window and vent are opened and the trained experimenter sits inside the chamber for 60 minutes to record the landing-probing (LP) inhibition and the knockdown at different times, e.g. after 10 to 60 minutes. Simultaneously, another trained experimenter, i.e. the control experimenter, enters a control chamber, i.e. a chamber without any vaporiser with composition/formulation, to check the mosquito landing-probing. The chamber is ventilated and cleaned after every replicate to eliminate the effect of previous treatment residues.

Landing and probing experiments are used to determine the percentage of protection (% protection), which is given by the difference between the repelled mosquitoes and the number of mosquitoes that does not land and probe.

"Knock-down percentage" or "% KD", as used in the present application means: the percentage of insects that after contact with a (sub)lethal dose of an insect control composition cannot move, take off or stand, with respect to the initial number of insects at the beginning of an experiment. The assessment of knock-down is made within 1 hour of exposure.

"Pyrethrum" as used in the present application means: extract obtained from pyrethrum flowers (*Chrysanthemum cinerariaefolium*).

"p-Menthane-3,8-diol" as used in the present application means: compound obtained from the leaves of *Corymbia citriodora, Eucalyptus Citriodora,* or any other plant resource. It comprises a mixture of *cis* and *trans* isomers of p-menthane-3,8-diol. It is also known as PMD, para-menthane-3,8-diol, and menthoglycol.

"Essential oils" as used in the present application means: aromatic, volatile compounds extracted from plants. These are obtained through distillation or mechanical methods and they contain the natural chemicals that give a particular plant its specific odour and flavour.

"Peppermint oil" as used in the present application means: essential oil obtained from the leaves of the peppermint plant. The major components of this oil are menthol and menthone.

"Thymol" as used in the present application means: natural monoterpenoid phenol derivative of p-Cymene, having the molecular formula C₁₀H₁₄O.

"Eucalyptus oil" as used in the present application means: essential oil obtained from the leaf of Eucalyptus. It may comprise, for example, at least 45 wt.% of 1,8-cinelol, based on the total weight of the essential oil, for example between 45 wt.% and 85 wt.% or between 49 wt.% and 84 wt.%.

"Citronella oil" as used in the present application means: essential oil obtained from the leaves and stems of *C. nardus* and *C. winterianus* species of lemongrass. It may comprise, for example, at least 5 wt.% of citronellal, at least 15 wt.% of geraniol, and at least 5 wt.% of citronellol based on the total weight of the essential oil, for example between 5 wt.% and 20 wt.% of citronellal, between 15 wt.% and 25 wt.% of geraniol, and between 5 wt.% and 10 wt.% of citronellol or between 30 wt.% and 50 wt.% of citronellal, between 20 wt.% and 30 wt.% of geraniol, and between 10 wt.% and 20 wt.% of citronellol. Citronella oil-producing plants have reddish and purplish pseudostems.

"Basil oil" as used in the present application means: essential oil obtained from the leaves of *Ocimum basilicum L*., of the Lamiaceae family.

"Citral" as used in the present application means: pair of mixtures of terpenoids with the molecular formula C₁₀H₁₆O. It has a strong lemon (citrus) odour and is used as an aroma compound. It is also known as 3,7-dimethyl-2,6-octadienal or lemonal.

"Lemongrass oil" as used in the present application means: essential oil obtained from the leaves and stems of *Cymbopogon flexuosus* species of lemongrass.

"Substantially free" as used in the present application means, when referring to a specific component or substance, that no such ingredient or substance is intentionally added to the composition.

### Detailed description of the invention

In a first aspect, the present invention relates to an insect control composition comprising:
- geraniol;
- at least one active selected from the group consisting of pyrethrum, p-Menthane-3,8-diol, peppermint oil, thymol, eucalyptus oil, citronella oil, basil oil, citral, lemongrass oil, and combinations thereof; and
- a solvent;
wherein the weight ratio between the geraniol to the at least one active is between 0.25:1 and 50:1.

The present inventors have observed that geraniol and at least one active selected from the group consisting of pyrethrum, p-Menthane-3,8-diol, peppermint oil, thymol, eucalyptus oil, citronella oil, basil oil, citral, lemongrass oil, and combinations thereof, when present in a composition in a weight ratio geraniol: at least one active of between 0.25:1 and 50:1, have a synergistic effect. In other words, they have an increased repellency or bio-efficacy than when the geraniol or the at least one actives are used alone and/or in low quantities.

If only geraniol is used in the composition, in order to achieve acceptable repellency results, the composition needs to comprise more than about 6 wt.% of geraniol, for example more than about 10 wt.% geraniol.

The person skilled in the art will understand that geraniol and the at least one active mentioned in the present disclosure are all products of natural origin. Hence, the composition according to the invention does not comprise any synthetic active ingredient, i.e. a component of the insect control composition to which the intended effect of the composition is attributed, such as controlling, destroying, attracting of repelling insects.

In an embodiment the insect control composition is substantially free of any synthetic active ingredient.

The ratio between the geraniol to the at least one active, i.e. geraniol: at least one active, may be between 0.5:1 and 40:1, preferably between 0.75:1 and 30:1, more preferably between 0.75:1 and 20:1, even more preferably between 0.75:1 and 15:1.

The insect control composition may comprise at least 0.01 wt.% of geraniol, based on the total weight of the composition, preferably between 0.01 wt.% and 50 wt.%, more preferably between 0.5 wt.% and 25 wt.%, even more preferably between 1 wt.% and 10 wt.%, most preferably between 2 wt.% and 8 wt.%.

The insect control composition may comprise at least 0.005 wt.% of pyrethrum, based on the total weight of the composition, preferably between 0.025 wt.% and 7.5 wt.%, more preferably between 0.05 wt.% and 5 wt.%, even more preferably between 0.1 wt.% and 2.5 wt.%, most preferably between 0.25 wt.% and 1.5 wt.%.

The present inventors have observed that when pyrethrum is added to the composition, the efficacy, e.g. the repellency, of the composition is increased. Furthermore, it allows for a reduction of the amount of geraniol in the composition. It should be noted that if high amounts of pyrethrum are used, it might block the wick of the refill of an emanation device, such as a vaporiser. Hence, the amounts of pyrethrum and geraniol should be carefully chosen in order to obtain a composition with good repellency properties, for example using landing and probing experiments, and suitable to be used in a refill of an emanation device, in particular a vaporiser.

In an embodiment, the insect control composition comprises:
- at least 0.01 wt.% of geraniol, based on the total weight of the composition, preferably between 0.01 wt.% and 50 wt.%, more preferably between 0.5 wt.% and 25 wt.%, even more preferably between 1 wt.% and 10 wt.%, most preferably between 2 wt.% and 8 wt.%;
- at least 0.005 wt.% of pyrethrum, based on the total weight of the composition, preferably between 0.025 wt.% and 7.5 wt.%, more preferably between 0.05wt.% and 5 wt.%, even more preferably between 0.1 wt.% and 2.5 wt.% , most preferably between 0.25 wt.% and 1.5 wt.%; and
- a solvent;
wherein the weight ratio between the geraniol to the at least one active is between 0.25:1 and 50:1, preferably between 0.5:1 and 40:1, more preferably between 0.75:1 and 30:1, even more preferably between 0.75:1 and 20:1, most preferably between 0.75:1 and 15:1.

The composition may comprise at least 0.01 wt.% of the at least one active selected from the group consisting of peppermint oil, thymol, eucalyptus oil, citronella oil, basil oil, citral, lemon grass oil, and combinations thereof, based on the total weight of the composition, preferably between 0.05 wt.% and 40 wt.%, more preferably between 0.1 wt.% and 20 wt.%, even more preferably between 0.5 wt.% and 15 wt.%, most preferably between 1 wt.% and 10 wt.%.

The present inventors have observed that when at least one active selected from the group consisting of peppermint oil, thymol, eucalyptus oil, citronella oil, basil oil, citral, lemon grass oil, and combinations thereof, is added to the composition according to the invention, good insect repellency is obtained. It should be noted that the composition may comprise pyrethrum or not.

Especially good results are obtained when the at least one active is selected from the group consisting of p-Menthane-3,8-diol, eucalyptus oil, citronella oil, basil oil, and combinations thereof.

### Solvent

The solvent in the insect control composition is needed for allowing the composition to be released into the air. This can be non-aqueous or aqueous.

In the case of a non-aqueous solvent, the solvent may comprise at least one aliphatic or aromatic hydrocarbon solvent, preferably at least one aliphatic hydrocarbon or hydrotreated hydrocarbom solvent. The solvent may comprise hydrocarbons selected from the group consisting of alcohols, n-paraffins, isoparaffins, cyclo-paraffins, and combinations thereof. The paraffin may be short-chain paraffin with a carbon chain length ≤ C₁₃, medium-chain paraffins with a carbon chain length C₁₄ to C₁₇, long-chain paraffins with a carbon chain length ≥ C₁₈, or a combination of paraffins, i.e. a blend of paraffins.

In an embodiment, the solvent comprises at least one aliphatic or aromatic hydrocarbon solvent selected from the group of hydrocarbon solvents having a flash point of at least 50°C, preferably having a flash point of at least 60°C, more preferably having a flash point between 60°C and 150°C, even more preferably having a flash point between 60°C and 140°C and/or having a boiling point of at least 150°C, preferably having a boiling point of at least 190°C, more preferably having a boiling point between 190°C and 500 °C, even more preferably having a boiling point between 190°C and 400°C.

In a preferred embodiment, the solvent comprises at least one aliphatic or aromatic hydrocarbon solvent selected from the group of hydrocarbon solvents:
- having a flash point of at least 50°C, more preferably having a flash point of at least 60°C, even more preferably having a flash point between 60°C and 150°C, most preferably having a flash point between 60°C and 140 °C; and
- having a boiling point of at least 150°C, preferably having a boiling point of at least 190°C, more preferably having a boiling point between 190°C and 500°C, even more preferably having a boiling point between 190°C and 400°C.

It is important that the solvent has a flash point of at least 50°C and preferably a boiling point of at least 200°C, because it would allow the composition to be used in an emanation device, for example, an electric heating device, such as a liquid vaporizer (LV). Preferably said at least one hydrocarbon comprises a blend of short-chain paraffins and medium-chain paraffins.

The hydrocarbon solvent is preferably dearomatized and deodorized and comprises normal paraffins, iso-paraffins and cyclo-paraffins. By dearomatized it is meant that the hydrocarbon solvent contains less than 2 wt.% aromatics. Examples of these hydrocarbons are Exxsol ^{™} D80, Exxsol ^{™} D100/D110, and Exxsol ^{™} D130.

When the solvent is aqueous, it comprises water, one or more surfactants and one or more alcohols. Preferably said one or more alcohols comprise or consist of C₁-C₄ alcohols selected from the group consisting of ethanol, propanol, glycol, glycol ether and alcohol ethers, including isomers and mixtures thereof.

Independently of the type of solvent that is used in the composition, the insect control composition may comprise at least 80 wt.% of the solvent, based on the total weight of the composition, preferably at least 85 wt.%, more preferably between 85 wt.% and 95 wt.%.

### Surfactants

The composition may comprise one or more surfactants comprising non-ionic surfactants, anionic surfactants, amphoteric surfactants or a blend thereof. The one or more surfactants preferably comprise one or more non-ionic surfactants such as for example poly-glycerol oleate, or a blend. Other nonionic surfactants that can be used include for example fatty acid, fatty alcohol, and amine, ethoxylates, propoxylates and ethoxylate/propoxylate combinations; mono-, di- and tri-sorbitan esters; mono- and d-glycerides; polyoxyethylene sorbitol esters; glycol ether; and blends thereof.

Preferably the one or more surfactants comprise or consist of one or more non-ionic surfactants. Examples of preferred non-ionic surfactants are spans (sorbitan esters) and tweens (Ethoxylated sorbitan esters or polysorbates).

### Antioxidant

The insect control composition may comprise at least one antioxidant. The antioxidant is preferably butylated hydroxytoluene (BHT), or butylated hydroxyanisole. The composition may further comprise an antioxidant in an amount ranging from 0.001 wt.% - 5 wt. %, based on the total weight of the composition, preferably in an amount of between 0.005 - 4 wt.%, more preferably in an amount of between 0.01 - 2 wt.%, even more preferably in an amount of between 0.05 - 1 wt.%.

A preferred composition may comprise:
- between 2 wt.% and 8 wt.% of geraniol, based on the total weight of the composition;
- between 85 wt.% and 95 wt.% of a solvent, based on the total weight of the composition, preferably at least 85 wt.%; wherein the solvent comprises at least one aliphatic or aromatic hydrocarbon solvent selected from the group consisting of hydrocarbon solvents having a flash point of at least 50 °C and/or having a boiling point of at least 190°C; and
   ∘ between 1 wt.% and 10 wt.% of at least one active selected from the group consisting of p-Menthane-3,8-diol, eucalyptus oil, citronella oil, basil oil, and combinations thereof, based on the total weight of the composition; and/or
   ∘ between 0.25 wt.% and 1.5 wt.% of pyrethrum, based on the total weight of the composition.

The composition may be an insect repellent composition or an insecticide composition.

In a second aspect, the invention relates to an insect control product comprising the composition according to the first aspect of the invention and an emanation device, wherein said emanation device is selected from the group comprising an electric heating device, a piezo electric diffuser and an ambient emanation device. Preferably, the emanation device in an electric heating device.

The insect control product may be an insect repellent product or an insecticide product.

It will be understood that the composition will be contained in a container attached to the emanation device and once the emanation device is being operated, the vapours of the composition would act as insecticide and/or repellent.

In an embodiment the emanation rate of the insect control product, when the product is operated, is between 0.02 to 0.5 g/h, preferably between 0.02 to 0.4 g/h, more preferably between 0.02 to 0.3 g/h. For example, if an insect control product comprising an emanation device and a composition according to the first aspect of the invention is operated, the difference in weight of the product during a determined period of time will give the emanation rate.

In some embodiments, the heating device can be a liquid vaporiser or a liquid electrical device. In a liquid vaporiser a composition is evaporated by an electric heater through a porous wick from a reservoir bottle containing the liquid. For an insect control composition, the composition lasts for a predetermined period. The skilled person will understand that a refill is used for about 4 to 10 hours per day, meaning that the total life-time of a refill can be from 25 to 90 days with an average use of 8 hours per day.

In a piezo electric diffuser, a composition is ejected into the air by a diffuser comprising an orifice plate which is vibrated by an actuator made of a piezoelectric material. Upon application of an alternating electrical field across the piezoelectric actuator it expands and contracts and causes the orifice plate to vibrate. The vibrating orifice plate contacts a liquid and, as a result, liquid droplets are propelled ultrasonically through the orifices in the plate and ejected into the atmosphere.

In an ambient emanation device, a substrate such as paper, plastic, or a synthetic or natural gel are impregnated with a composition, and the composition is evaporated at ambient temperature without the need for an external source of energy. Examples of synthetic or natural gel are agarose-based gels, xanthan gum, styrene-ethylene/butylene-styrene (SEBS) copolymers, styrene-ethylene/propylene-styrene (SEPS) copolymers, and fumed silica gel.

In a third aspect, the invention relates to a use of a composition according to the first aspect or the insect control product according to the second aspect to kill, knock-down and/or repel insects, preferably flying insects.

In a further aspect the present invention is directed to a method of killing, know-down and/or repelling insects in an area of interest comprising the steps of:
a. applying the composition according to the first aspect the invention to an emanation device selected from the group consisting of electric heating device, a piezo electric diffuser and an ambient emanation device to produce an insect control product according to the second aspect of the invention, or providing the insect control product according to the second aspect of the invention,
b. providing an emanation rate of the insect control product during the operation ranging between 0.02 to 0.5 g/h, preferably between 0.02 to 0.4 g/h, more preferably between 0.02 to 0.3 g/h, and
c. reducing the insect population in said area of interest by at least 10%, 20%, 30%, 40%, 50% as compared to the same period of employing the method when such composition is not used.

It will be understood that the insect control product in step b of the method, is the insect control product obtained in step a of the method or the insect control product according to the second aspect of the invention.

The foregoing aspects may be freely combined with any of the foregoing aspects disclosed herein. In other words, the embodiments of the invention described herein with respect to any single embodiment shall be taken to apply *mutatis mutandis* to any other embodiment of the invention described herein.

The invention will be further described, by way of example, with the reference to the following non-limiting embodiments.

### Examples

### Formulations

Several formulations were prepared, and their composition is shown in Table 1.

**Table 1. Formulations**

| | **Ingredient (wt.%)** | | | | | | | |
|---|---|---|---|---|---|---|---|---|
| **Formulation** | **Geraniol** | **Pyrethrum** | **PMD** | **Eucalyptus oil** | **Citronella oil** | **Basil oil** | **BHT** | **Solvent** |
| **1** | 3 | 2.0 | | | | | 0.095 | q.s |
| **2** | 6 | 0.5 | | | | | 0.095 | q.s |
| **3** | 4 | 0.5 | | 3 | | | 0.095 | q.s |
| **4** | 4 | 0.5 | | | 3 | | 0.095 | q.s |
| **5** | 6 | 0.4 | | | | | 0.095 | q.s |
| **6** | 2.7 | 0.35 | | 3 | | | 0.095 | q.s |
| **7** | 6 | 0.25 | | | | | 0.095 | q.s. |
| **8** | 6 | | | 2 | 3 | 0.9 | 1.000 | q.s. |

In Table 1:
PMD = p-Menthane-3,8-diol.
BHT = butylated hydroxytoluene.
Solvent = selected from Exxsol ^{™} D80, Exxsol ^{™} D100/D110, Exxsol ^{™} D130, or equivalent and combinations thereof.

### Performance tests

### Repellency tests - mosquitoes

The formulations of Table 1 were tested using landing and probing experiments to demonstrate their efficacy in inhibiting landing and probing of *Aedes* mosquitoes. These tests provide the % of protection achieved with each formulation. The formulation to be tested was placed in the refill of a liquid vaporizer. The results are shown in Table 2.

**Table 2. Landing and probing inhibition using Aedes mosquitoes**

| Formulation | % Protection |
|---|---|
| 1 | 99 |
| 2 | 100 |
| 3 | 97 |
| 4 | 98 |
| 5 | 94 |
| 6 | 88 |
| 7 | 62 |
| 8 | 67 |

It is considered that an insect control composition should have a %-age of protection of at least 50%. In Table 2 it is demonstrated that compositions comprising geraniol and at least one active selected from the group consisting of pyrethrum, p-Menthane-3,8-diol, peppermint oil, thymol, eucalyptus oil, citronella oil, basil oil, citral, lemongrass oil, and combinations thereof, and in which the ratio between the geraniol to the at least one active is between 0.25:1 and 20:1, provide an acceptable repellency of flying insects, in particular, mosquitoes.

Hence one or more objects of the present invention are achieved by the present which is further elucidated in the appended claims.

## Claims

1. An insect control composition comprising:
- geraniol;
- at least one active selected from the group consisting of pyrethrum, p-Menthane-3,8-diol, peppermint oil, thymol, eucalyptus oil, citronella oil, basil oil, citral, lemongrass oil, and combinations thereof; and
- a solvent;
wherein the weight ratio between the geraniol to the at least one active is between 0.25:1 and 50:1.

2. The insect control composition according to claim 1, wherein the ratio between the geraniol to the at least one active is between 0.5:1 and 40:1, preferably between 0.75:1 and 30:1, more preferably between 0.75:1 and 20:1, even more preferably between 0.75:1 and 15:1.

3. The insect control composition according to claim 1 or claim 2, wherein the solvent comprises at least one aliphatic or aromatic hydrocarbon solvent selected from the group consisting of hydrocarbon solvents having a flash point of at least 50°C, preferably having a flash point of at least 60°C, more preferably having a flash point between 60°C and 150°C, even more preferably having a flash point between 60°C and 140°C, and/or having a boiling point of at least 150°C, preferably having a boiling point or at least 190°C, more preferably having a boiling point between 190°C and 500°C, even more preferably having a boiling point between 190°C and 400°C.

4. The insect control composition according to any of the preceding claims, wherein the composition comprises at least 0.01 wt.% of geraniol, based on the total weight of the composition, preferably between 0.01 wt.% and 50 wt.%, more preferably between 0.5 wt.% and 25 wt.%, even more preferably between 1 wt.% and 10 wt.%, most preferably between 2 wt.% and 8 wt.%.

5. The insect control composition according to any of the preceding claims, wherein the composition comprises at least 0.005 wt.% of pyrethrum, based on the total weight of the composition, preferably between 0.025 wt.% and 7.5 wt.%, more preferably between 0.05 wt.% and 5 wt.%, even more preferably between 0.1 wt.% and 2.5 wt.%, most preferably between 0.25 wt.% and 1.5 wt.%.

6. The insect control composition according to any of the preceding claims, wherein the composition comprises at least 0.01 wt.% of the at least one active selected from the group consisting of peppermint oil, thymol, eucalyptus oil, citronella oil, basil oil, citral, lemon grass oil, and combinations thereof, based on the total weight of the composition, preferably between 0.05 wt.% and 40 wt.%, more preferably between 0.1 wt.% and 20 wt.%, even more preferably between 0.5 wt.% and 15 wt.%, most preferably between 1 wt.% and 10 wt.%.

7. The insect control composition according to any of the preceding claims, wherein the at least one active is selected from the group consisting of p-Menthane-3,8-diol, eucalyptus oil, citronella oil, basil oil, and combinations thereof.

8. The insect control composition according to any of the preceding claims, wherein the composition comprises at least 80 wt.% of the solvent, based on the total weight of the composition, preferably at least 85 wt.%, more preferably between 85 wt.% and 95 wt.%.

9. The insect control composition according to any of the preceding claims, wherein the composition is an insect repellent composition or an insecticide composition.

10. An insect control product comprising the composition according to any of the preceding claims and an emanation device wherein said emanation device is selected from the group comprising an electric heating device, a piezo electric diffuser and an ambient emanation device, preferably wherein the emanation device is an electric heating device.

11. The insect control product according to claim 10, wherein the insect control product is an insect repellent product or an insecticide product.

12. A use of the composition according to any of the claims 1-9 or the insect control product according to claims 10-11 to kill, knockdown and/or repel insects.

13. Use according to claim 12, wherein said insects are flying insects.

14. A method of killing, know-down and/or repelling insects in an area of interest comprising the steps of:
a. applying the composition according to any of the claims 1-9 to an emanation device selected from the group consisting of electric heating device, a piezo electric diffuser and an ambient emanation device to produce an insect control product according to the second aspect of the invention, or providing the insect control product according to any of the claims 10-11,
b. providing an emanation rate of the insect control product during the operation ranging between 0.02 to 0.5 g/h, preferably between 0.02 to 0.4 g/h, more preferably between 0.02 to 0.3 g/h, and
c. reducing the insect population in said area of interest by at least 10%, 20%, 30%, 40%, 50% as compared to the same period of employing the method when such composition is not used.
